# EUROPÄISCHE PATENTSCHRIFT

(11) **EP 0 469 256 B1**
(45) Veröffentlichungstag und Bekanntmachung des Hinweises auf die Patenterteilung: **09.10.1996**
(21) Anmeldenummer: 91107813.7
(22) Anmeldetag: 15.05.1991
(51) Int. Cl.: B65G 15/14, A22C 11/00

(54) **Einrichtung zum Transport von Stückgütern**
Device for transporting piece-goods
Dispositif pour tansporter des marchandises en pièce

(30) Priorität: 28.07.1990 DE 4024037
(43) Veröffentlichungstag der Anmeldung: 05.02.1992
(73) Patentinhaber: Albert Handtmann Maschinenfabrik GmbH & Co. KG, D-88400 Biberach (DE)
(72) Erfinder: Strasser, Karl-Heinz, W-7981 Berg b. Ravensburg (DE); Röck, Martin, Dipl.-Ing. (FH), W-7992 Tettnang (DE)
(74) Vertreter: Engelhardt, Guido, Dipl.-Ing.

(56) Entgegenhaltungen:
- EP-A- 0 366 904
- DE-A- 2 127 210
- DE-A- 2 414 386
- DE-C- 3 121 432
- GB-A- 1 551 723
- US-A- 4 112 546
- US-A- 4 180 156
- US-A- 4 270 650

## Beschreibung

Die Erfindung bezieht sich auf eine Einrichtung zum Transport von Stückgütern, beispielsweise von Würstchen oder ähnlichen Waren, zu einer Übergabestation mit einem antreibbaren endlosen Transportband, wobei an einer oder beiden Längsseiten des Transportbandes jeweils ein achssenkrecht zu diesem angeordnetes und synchron mit diesem in dessen Förderrichtung antreibbares endloses Führungsband vorgesehen ist und den Führungsbeändern Umlenkrollen zugeordnet sind.

Durch die GB-A-1 551 723 ist eine Transporteinrichtung dieser Art bekannt. Den Führungsbändern sind hierbei zwar zwischen den Führungsrollen eingesetzte Montierungsplatten zugeordnet, die in Richtung des Transportbandes verstellbar und mittels denen die Führungsbänder gegen die auf dem Transportband aufliegenden Stückgüter preßbar sind, die Montierungsplatten sind aber baulich von den Führungsbändern durch sich periodisch seitlich bewegende Orientierungsleisten getrennt, so daß die Bänder mitunter nicht exakt geführt sind und somit Differenzgeschwindigkeiten zwischen dem Transportband und den Führungsbändern auftreten. Beschädigungen der Stückgüter bzw. deren Verpackungen sind demnach unvermeidbar.

Aufgabe der Erfindung ist es daher, eine Einrichtung zum Transport von Stückgütern der eingangs genannten Gattung in der Weise zu verbessern, daß auch äußerst empfindliche Stückgüter zuverlässig befördert werden können, ohne daß diese dabei das Transportband seitlich verlassen können, und bei einer Anlage an einer seitlichen Begrenzung beschädigt werden. Ohne großen Bauaufwand soll vielmehr erreicht werden, daß zwischen den Stückgütern bei deren Transport auf dem Transportband und der seitlichen Begrenzung keine Relativbewegungen auftreten, so daß ein beispielsweise dadurch bedingtes Aufreißen der Umhüllung eines Produktes nahezu ausgeschlossen ist. Außerdem soll es möglich sein, Stückgüter bereits während ihres Transportes zu portionieren und sicher einer dem Transportband nachgeschalteten Einrichtung zuzuführen.

Gemäß der Erfindung wird dies dadurch erreicht, daß die Führungsbänder jeweils eine Auflageschiene aufweisen, in denen die Umlenkrollen gelagert sind, und daß die Auflageschienen der Führungsbänder mittels eines oder mehrerer das Transportband übergreifender Halter an einer seitlich angeordneten Montageplatte, vorzugsweise lösbar, befestigt sind.

Hierbei ist es angebracht, mindestens eines der Führungsbänder gegenüber dem Transportband seitlich verstellbar, vorzugsweise an den Haltern, zu befestigen.

Des weiteren sollte zumindest jeweils eine der in den Endbereichen der Auflageschienen gelagerten Umlenkrollen der Führungsbänder über Getriebemittel mit dem Antriebsmotor des Transporbandes oder einem gesonderten Antriebsmotor trieblich verbunden sein. Auch sollte zur Triebverbindung der Umlenkrollen mit dem Antriebsmotor einer derHalter mit einer antreibbaren Mehrkantwelle versehen sein, auf der Kegelräder verschiebbar gelagert sind, die mit mit den Umlenkrollen unmittelbar oder über Zwischenglieder trieblich verbundene Kegelräder in Eingriff sind.

Um die nutzbare Breite des Transportbandes verändern und somit die geförderten Stückgüter während des Transportes gegebenenfalls ausrichten zu können, ist es ferner zweckmäßig, zumindest eines der dem Transportband zugeordneten Führungsbänder seitlich gegenüber diesem verschwenkbar an den Haltern abzustützen.

Dies kann in der Weise bewerkstelligt werden, daß in die Auflageschiene in einem Endbereich eine Buchse eingesetzt ist, auf der die Auflageschiene verdrehbar gelagert ist, und daß die Buchse in Förderrichtung des Transportbandes beispielsweise mittels eines Stiftes verschiebbar in einem an dem Halter befestigten Bügel aufgehängt ist.

Angebracht ist es ferner, mindestens eine der Auflageschienen mit einer in Förderrichtung des Transportbandes geneigt verlaufenden Einführschräge zu sehen. Die Führungsbänder können sich ganz oder teilweise über die Länge der Auflagefläche des Transportbandes erstrekkend durchgehend oder unterteilt ausgebildet sein und jeweils aus einem endlosen Zahnriemen bestehen.

Außerdem sollten die Führungsbänder das Transportband übergreifende mit seitlichem Abstand zueinander angeordnete Mitnehmernocken aufweise, die durch an den Führungsbändern befestigte, achssenkrecht von diesen abstehende, beispielsweise an den Zahnriemen angeschweißte Platten gebildet sein können.

Wird eine Einrichtung zum Transport von Stückgütern gemäß der Erfindung ausgebildet, so ist es möglich, auch sehr empfindliche Stückgüter mittels der Transporteinrichtung zu überführen. Da die äußeren Führungsbänder stets synchron mit dem Transportband mitlaufen, tritt bei einer Anlage der Stückgüter an diesen keine Relativbewegung und somit keine Reibung auf, durch die die Umhüllung eines geförderten Produktes aufgerissen werden kann. Beschädigungen von Stückgütern und dadurch bedingte Folgeerscheinungen, wie Unterbrechung des Betriebsablaufes, Reingung der Transporteinrichtung sowie nicht verwertbare Ausschußware, sind somit weitgehend vermieden. Die vorschlagsgemäß ausgebildete Einrichtung ist demnach insbesondere zum Transport von Würstchen in sehr vorteilhafter Weise einsetzbar.

Des weiteren können durch die an den Führungsbändern angebrachten Mitnehmernocken die Stückgüter bereits während des Transportes auf dem Transportband zu Gruppen zusammengefaßt und für die Weiterverarbeitung und/oder den Weitertransport in eine vorbestimmte Lage gebracht werden. Durch die Mitnehmernocken wird nämlich das Transportband in einzelne Abschnitte unterteilt, in denen jeweils eine Stückgütergruppe transportiert und ausgerichtet wird. Auch können die Mitnehmernocken als Transportglieder genutzt werden, um die Stückgüter, beispielsweise einer Übergabestation, zuzuführen.

In der Zeichnung ist ein Ausführungsbeispiel der gemäß der Erfindung ausgebildeten Einrichtung zum Transport von Stückgütern dargestellt und nachfolgend im einzelnen erläutert. Hierbei zeigt:
- Figur 1: die Transporteinrichtung in Draufsicht,
- Figur 2: die Transporteinrichtung nach Figur 1 in einem achssenkrechten Schnitt nach der Linie II - II der Figur 1
und
- Figur 3: einen Längsschnitt nach der Linie III - III der Figur 1.

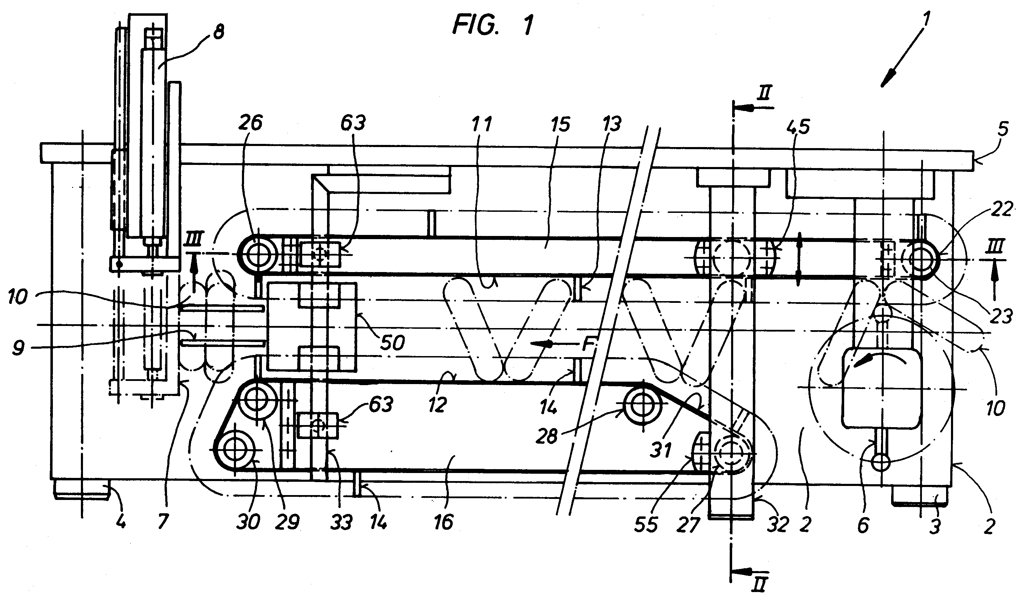

Die in Figur 1 dargestellte und mit 1 bezeichnete Einrichtung dient zum Transport von Stückgütern, beispielsweise von aus einer Wurstmaschine ausgepreßten, strichpunktiert eingezeichneten Würstchen 10, die portioniert mittels eines Hubgliedes 9 vertikal weiterbefördert werden,und besteht im wesentlichen aus einem zwischen der Wurstmaschine und dem Hubglied 9 angeordneten endlosen Transportband 2, das über an einer Montageplatte 5 abgestützte Umlenkwalzen 3 und 4 geführt ist. Über dem Transportband 2 ist hierbei in dessen Eingangsbereich ein rotierend antreibbarer Verteilerstern 6 angeordnet, mittels dem die in Förderrichtung F zugeführten Würstchen 10 quer zu dieser verschoben werden, um in einer achssenkrechten Lage von dem Hubglied 9 übernommen zu werden. Das Hubglied 9 ist dazu mit einem Anschlag 7 ausgestattet, der mittels eines Verstellzylinder 8 verstellbar ist, so daß gegebenenfalls die geförderten Stückgüter auch von einer sich an das Transportband 2 anschließenden Einrichtung übernommen werden können.

Um zu verhindern, daß die durch den Verteilerstern 6 quer gelegten Würstchen 10 beim Transport auf dem Transportband 2 von diesem seitlich abrutschen können, sind beiderseits des Transportbandes 2 Begrenzungen vorgesehen, die durch synchron umlaufende endlose Führungsbänder 11 und 12 gebildet sind. Die Führungsbänder 11 und 12 sind um Auflageschienen 15 und 16 gelegt, die an an der Montageplatte 5 befestigte Halter 32 bzw. 33 aufgehängt sind. Außerdem sind die zweckmäßigerweise aus Zahnriemen bestehenden Führungsbänder 11 und 12 mit Mitnehmernocken 13 und 14 in Form von das Transportband 2 übergeifenden angeschweißten Platten ausgestattet, die mit seitlichem Abstand zueinander angeordnet sind. Auf diese Weise können die Würstchen 10 bereits während des Transportes auf dem Transportband 2 portioniert werden.

Zum Antrieb des Transportbandes 2 sowie der Führungsbänder 11 und 12 dient ein Motor 34, der über einen Zahnriementrieb 35 mit der Welle 3' der Umlenkwalze 3 in Triebverbindung steht. Über einen weiteren Riementrieb 36, der mit einer Spannrolle 37 ausgestattet ist, ist die Welle 3' trieblich mit einer Welle 38 verbunden, die über eine Steckkupplung 39 mit einer fluchtend zu dieser in dem Halter 32 angeordneten Mehrkantwelle 40 gekoppelt ist. Auf der Mehrkantwelle 40 sind mittels Schrauben 44 bzw. 54 arretierbare Kegelräder 41 und 51 verschiebbar gelagert, die mit auf Wellen 43 bzw. 53 angeordneten Kegelrädern 42 bzw. 52 in Eingriff sind. Mittels Halterungen 45 bzw. 55 sind die Kegelräder 42 bzw. 52 und die diesen zugeordneten Wellen 43 bzw. 53 in dem C-förmig ausgebildeten Halter 32 gelagert, der auf der Unterseite durch eine Abdeckung 46 verschlossen ist.

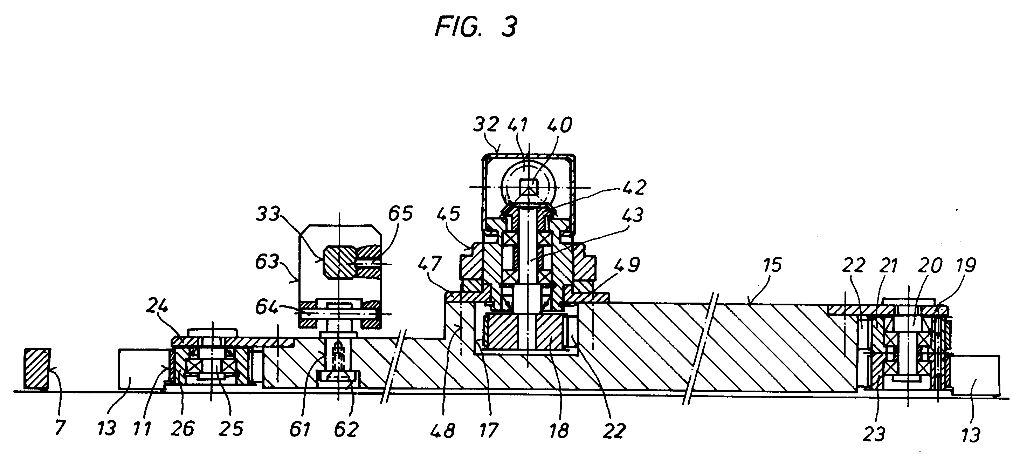

Über die Halterungen 45 und 55 sind, wie dies der Figur 3 zu entnehmen ist, auch die Auflageschienen 15 und 16 an dem Halter 32 aufgehängt, und zwar dienen dazu jeweils an der Halterung 45 bzw. 55 angebrachte Platten 47, die durch Schrauben 48 an der Auflageschiene 15 bzw. 16 befestigt und durch Sprengringe 49 in den Halterungen 45 bzw. 55 abgestützt sind.

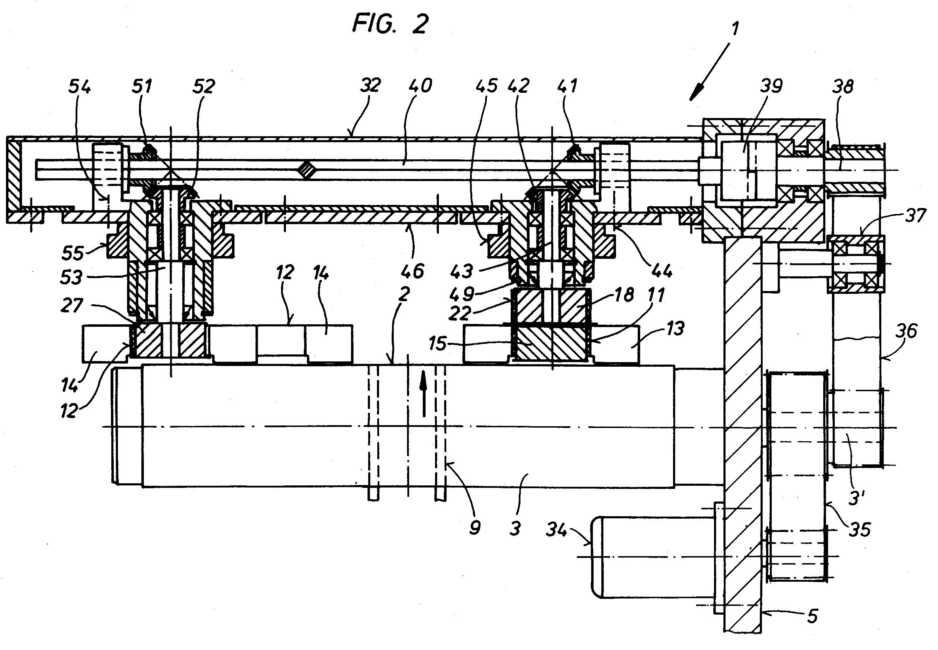

Auf der Welle 43 ist, wie dies den Figuren 2 und 3 zu entnehmen ist, eine Zahnriemenscheibe 18 drehfest angeordnet, die in eine in die Auflageschiene 15 eingearbeitete Ausnehmung 17 eingreift. Über einen Zahnriemen 22 steht die Zahnriemenscheibe 18 mit einer Zahnriemenscheibe 21 in Triebverbindung, die auf einer mittels einer Platte 19 an der Auflageschiene 15 befestigten Welle 20 drehbar gelagert ist. Auf der Welle 20 ist des weiteren eine Umlenkrolle 23 für das Führungsband 11 gelagert, die drehfest mit der Zahnriemenscheibe 21 gekoppelt ist. Die an einem Ende der Auflageschiene 15 vorgesehene Umlenkrolle 23 ist somit durch den Motor 34 über die vorgenannten Getriebeglieder antreibbar. Am anderen Ende der Auflageschiene 15 ist eine weitere Umlenkrolle 26 für das Führungsband 11 vorgesehen, die drehbar auf einer ebenfalls mittels einer Platte 24 gehaltenen Welle 25 gelagert ist.

Dem Führungsband 12 ist eine mit der Welle 53 drehfest verbundene Antriebsrolle 27 sowie Umlenkrollen 28, 29 und 30 zugeordnet, die in gleicher Weise an der Auflageschiene 16 abgestützt sind wie die der Auflageschiene 15 zugeordneten Umlenkrollen 23 und 24. Des weiteren ist die Auflageschiene 16 mit einer in Förderrichtung F des Transportbandes 2 geneigt verlaufenden Einführschräge 31 ausgestattet.

Die dem Transportband 2 in dessen Förderrichtung F zugeführten Würstchen 10 werden durch den Verteilerstern 6 quer gelegt und von dem Transportband 2 dem Hubglied 9 zugeführt. Dabei werden die Würstchen 10, da durch die an den synchron mitlaufenden Führungsbändern 11 und 12 angebrachten Mitnehmernocken 13 und 14 der Transportbereich durch diese in einzelne Abschnitte unterteilt ist, portioniert, außerdem ist nahezu ausgeschlossen, daß durch Reibung an den seitlichen Begrenzungen Beschädigungen in Kauf zu nehmen sind. Auch dienen die Mitnehmernocken 13, 14 dazu, die Würstchen 10 dicht an den Anschlag 7 anzulegen, so daß eine störungsfreie Überführung in ein anderes Transportbehältnis gewährleistet ist. Durch einen vorsorglich vorgesehenen Niederhalter 50 wird dabei verhindert, daß evtl. weitere Würstchen mit angehoben werden.

Bei gelösten Schrauben 44 und/oder 54 können die Kegelräder 41 und/oder 51 und die mit diesen verbundenen Bauteile auf der Welle 40 verschoben werden, so daß die lichte Weite zwischen den Führungsbändern 11 und 12 auf die jeweils zu fördernden Stückgüter leicht eingestellt werden kann. Auch kann zur Reinigung des Transportbandes 2 und/oder der Führungsbänder 11, 12 der Halter 32, da dieser über die Steckkupplung 39 mit der Welle 38 gekoppelt ist, problemlos abgenommen werden.

Dies gilt in gleicher Weise auch in bezug auf den Halter 33, an dem die Auflageschienen 15 und 16, wie dies in Figur 3 gezeigt ist, jeweils mittels eines Bügels 63 aufgehängt sind, der durch eine Schraube 65 mit dem Halter 33 verspannt ist.

Mittels des Bügels 63 sind die Auflageschienen 15, 16 aber nicht nur seitlich verschiebbar, sondern auch verdrehbar gehalten. Dazu dient eine Buchse 61, auf der die Auflageschienen 15 bzw. 16 mittels einer angeschraubten Scheibe 62 verdrehbar gehalten sind. Des weiteren ist die Buchse 61 verschiebbar auf einem in den Bügel 63 eingesetzten Stift 64 gelagert, so daß die Auflageschienen 15 bzw. 16 gegenüber den Lagerstellen in dem Halter 32 verdreht werden können und somit beispielsweise ein sich stetig verkleinernder Abstand zwischen den beiden Führungsbändern 11 und 12 einstellbar ist. Die sich bei einer Schwenkbewegung der Auflageschienen 15 und/oder 16 ergebenden Lageänderungen der Büchsen 61 werden durch die Verschiebebewegungen auf den Stiften 64 ausgeglichen.

## Patentansprüche

1. Einrichtung (1) zum Transport von Stückgütern (10), beispielsweise von Würstchen oder ähnlichen Waren, zu einer Übergabestation (9) mit einem antreibbaren endlosen Transportband (2), wobei an einer oder beiden Längsseiten des Transportbandes (2) jeweils ein achssenkrecht zu diesem angeordnetes und synchron mit diesem in dessen Förderrichtung (F) antreibbares endloses Führungsband (11, 12) vorgesehen ist und den Führungsbändern (11, 12) Umlenkrollen (18, 19, 23 bzw. 27, 28, 29, 30) zugeordnet sind,
**dadurch gekennzeichnet,**
daß die Führungsbänder (11, 12) jeweils eine Auflageschiene (15, 16) aufweisen, in denen die Umlenkrollen (18, 21, 23 bzw. 27, 28, 29, 30) gelagert sind, und daß die Auflageschienen (15, 16) der Führungsbänder (11, 12) mittels eines oder mehrerer das Transportband (2) übergreifender Halter (32, 33) an einer seitlich angeordneten Montageplatte (5), vorzugsweise lösbar, befestigt sind.

2. Einrichtung nach Anspruch 1,
**dadurch gekennzeichnet,**
daß mindestens eines der Führungsbänder 811, 12) gegenüber dem Transportband (2) seitlich verstellbar, vorzugsweise an den Haltern (32, 33), befestigt ist.

3. Einrichtung nach Anspruch 1 oder 2,
**dadurch gekennzeichnet,**
daß zumindest jeweils eine der in den Endbereichen der Auflageschienen (15, 16) gelagerten Umlenkrollen (23, 27) der Führungsbänder (11, 12) über Getriebemittel (Zahnriementrieb 36) mit dem Antriebsmotor (34) des Transportbandes (2) oder einem gesonderten Antriebsmotor trieblich verbunden ist.

4. Einrichtung nach einem oder mehreren der Ansprüche 1 bis 3,
**dadurch gekennzeichnet,**
daß zur Triebverbindung der Umlenkrollen (23, 27) mit dem Antriebsmotor (34) einer der Halter (32) mit einer antreibbaren Mehrkantwelle (40) versehen ist, auf der Kegelräder (41; 51) verschiebbar gelagert sind, die mit mit den Umlenkrollen (23, 27) unmittelbar oder über Zwischenglieder (Zahnriemen 32) trieblich verbundene Kegelräder (42; 52) in Eingriff sind.

5. Einrichtung nach einem oder mehreren der Ansprüche 1 bis 4
**dadurch gekennzeichnet,**
daß zumindest eines der dem Transportband (2) zugeordneten Führungsbänder (11, 12) seitlich gegenüber diesem verschwenkbar an den Haltern (32, 33) abgestützt ist.

6. Einrichtung nach Anspruch 5,
**dadurch gekennzeichnet,**
daß zur verschwenkbaren Halterung des Führungsbandes (11) in dessen Auflageschiene (15) in einem Endbereich eine Buchse (61) eingesetzt ist, auf der die Auflageschiene (15) verdrehbar belagert ist, und daß die Buchse (61) in Förderrichtung (F) des Transportbandes (2) beispielsweise mittels eines Stiftes (64) verschiebbar in einem an dem Halter (33) befestigten Bügel (63) aufgehängt ist.

7. Einrichtung nach einem oder mehreren der Ansprüche 1 bis 6,
**dadurch gekennzeichnet,**
daß mindestens eine der Auflageschienen (16) mit einer in Förderrichtuang (F) des Transportbandes (2) geneigt verlaufenden Einführschräge (31) versehen ist.

8. Einrichtung nach einem oder mehreren der Ansprüche 1 bis 7,
**dadurch gekennzeichnet,**
daß die Führungsbänder (11, 12) sich ganz oder teilweise über die Länge der Auflagefläche des Tansportbandes (2) erstreckend durchgehend oder unterteilt ausgebildet sind.

9. Einrichtung nach einem oder mehreren der Ansprüche 1 bis 8,
**dadurch gekennzeichnet,**
daß die Führungsbänder (11, 12) jeweils durch einen endlosen Zahnriemen gebildet sind.

10. Einrichtung nach einem oder mehreren der Ansprüche 1 bis 9,
**dadurch gekennzeichnet,**
daß die Führungsbänder (11, 12( das Transportband (2) übergreifende mit seitlichem Abstand zueinander angeordnete Mitnehmernocken (13, 14) aufweisen.

11. Einrichtung nach Anspruch 10,
**dadurch gekennzeichnet,**
daß die Mitnehmernocken (13, 14) durch an den Führungsbändern (11, 12) befestigte, achssenkrecht von diesen abstehende, beispielsweise an den Zahnriemen angeschweißte Platten gebildet sind.

## Claims

1. A device (1) for transporting piece-goods (10), for example sausages or similar items, to a transfer station (9), having a driven endless conveyor belt (2) with an endless guide belt (11, 12) arranged on one or both longitudinal sides of the conveyor belt (2), arranged perpendicular thereto and driven synchronously to the conveyor belt (2) in its direction of transport (F), and with deflection rollers (18, 19, 23 or 27, 28, 29, 30) allocated to the guide belts (11, 12),
**characterized in that,**
the guide belts (11, 12) each possess a support rail (15, 16) in which the deflection rollers (18, 19, 23 or 27, 28, 29, 30) are mounted, and that the support rails (15, 16) for the guide belts (11, 12) are attached in a preferably releasable arrangement to a laterally fitted mounting plate (5) by means of one or more fastening devices (32, 33) which pass over the conveyor belt (2).

2. The device in accordance with Claim 1,
**characterized in that,**
at least one of the guide belts (11, 12) can be moved laterally in relation to the conveyor belt (2), preferably moving on the fastening devices (32, 33).

3. The device in accordance with Claim 1 or Claim 2,
**characterized in that,**
at least one each of the deflection rollers (23, 27) of the guide belts (11, 12) which are mounted at the extremities of the support rails (15, 16) is in a driving connection with the drive motor (34) of the conveyor belt (2) or with a separate drive motor by means of gearing (toothed belt drive 36).

4. The device in accordance with one or more of Claims 1 to 3,
**characterized in that,**
in order to establish a driven connection between the deflection rollers (23, 27) and the drive motor (34), one of the fastening devices (32) is equipped with a driven polygonal shaft (40) with bevel gears (41; 51) mounted upon it in a movable arrangement and the bevel gears (41; 51) mesh with bevel gears (42; 52) which are connected to the deflector rollers (23, 27) either directly or by means of intermediate elements (toothed belt 32).

5. The device in accordance with one or more of Claims 1 to 4,
**characterized in that,**
at least one of the guide belts (11, 12) allocated to the conveyor belt (2) is mounted on its fastening devices (32, 33) so as to be able to swing laterally in relation to the conveyor belt (2).

6. The device in accordance with Claim 5,
**characterized in that,**
in order to hold the guide belt (11) in its support rail (15) so it is able to swing, a bush (61) is inserted in an extremity of the support rail (15) with the support rail (15) being mounted on the bush (61) in such a manner that the support rail (15) can rotate, and that the bush (61) is supported in a tie (63), for example by means of a pin (64) allowing it to move in the direction of transport (F) of the conveyor belt (2), with the tie (63) being attached to the fastening device (33).

7. The device in accordance with one or more of Claims 1 to 6,
**characterized in that,**
at least one of the support rails (16) has an angled infeed (31) running at an angle to the direction of transport (F) of the conveyor belt (2).

8. The device in accordance with one or more of Claims 1 to 7,
**characterized in that,**
the guide belts (11, 12) are formed as continuous or divided elements running along the whole length or part of the length of the contact surface of the conveyor belt (2).

9. The device in accordance with one or more of Claims 1 to 8,
**characterized in that,**
the guide belts (11, 12) are each formed by one endless toothed belt.

10. The device in accordance with one or more of Claims 1 to 9,
**characterized in that,**
the guide belts (11, 12) have driver lugs (13, 14) arranged at lateral distances from one another and which pass over the conveyor belt (2).

11. The apparatus in accordance with Claim 10,
**characterized in that,**
the driver lugs (13, 14) are formed by plates attached to the guide belts (11, 12) and projecting at a perpendicular angle from the guide belts (11, 12), for example by plates welded to the toothed belts.

## Revendications

1. Dispositif (1) pour transporter des marchandises en pièces (10), par exemple des saucisses ou des objets semblables, vers une station de transfert (9), au moyen d'une bande transporteuse continue et entraînée (2), avec respectivement sur un ou les deux côtés latéraux de la bande transporteuse (2), une bande de guidage continue entraînée (11, 12) disposée perpendiculairement à l'axe de la première et entraînée de manière synchrone à celle-ci en sa direction de transport (F), et qu'il est attribué aux bandes de guidage (11, 12) des galets de renvoi (18, 19, 23 ou 27, 28, 29, 30),
caractérisé en ce que
les bandes de guidage (11, 12) comprennent respectivement une glissière support (15, 16) pour le logement des galets de renvoi (18, 19, 23 ou 27, 28, 29, 30), et que, au moyen d'un ou de plusieurs supports (32, 33) passant par-dessus la bande transporteuse (2) , les glissières supports (15, 16) des bandes de guidage (11, 12) sont fixées sur une plaque de montage latérale (5) de sorte qu'elles se laissent détacher.

2. Dispositif d'après la revendication 1,
caractérisé en ce que
au moins une des bandes de guidage (11, 12) est fixée réglable latéralement par rapport à la bande transporteuse (2), de préférence sur les supports (32, 33).

3. Dispositif d'après la revendication 1 ou 2,
caractérisé en ce que
au moins un des galets de renvoi (23, 27) des bandes de guidage (11, 12), logés aux extrémités des glissières support (15, 16) est lié entraîné au moyen d'organes de transmission (courroie dentée 36) au moteur d'entraînement (34) de la bande transporteuse (2) ou à un moteur d'entraînement séparé.

4. Dispositif d'après une ou plusieurs des revendications 1 à 3,
caractérisé en ce que
pour l'entraînement des galets de renvoi (23, 27) par le moteur d'entraînement (34), un des supports (32) est équipé d'un arbre entraîné (40), sur lequel sont disposés des pignons déplaçables (41; 51) s'engrenant dans les roues coniques (42; 52) liées directement ou via des membres intermédiaires (courroie dentée 32) aux galets de renvoi (23, 27).

5. Dispositif d'après une ou plusieurs des revendications 1 à 4,
caractérisé en ce que
au moins une des bandes de guidage (11, 12) assignées à la bande transporteuse (2) et prévue sur le côté de celle-ci, s'appuie pivotant sur les supports (32, 33).

6. Dispositif d'après la revendication 5,
caractérisé en ce que
pour le support pivotant de la bande de guidage (11), il est prévu dans une extrémité de sa glissière support (15) une douille (61), sur laquelle repose pivotant la glissière support (15) et que, en direction de transport (F) de la bande transporteuse (2), la douille (61) est accrochée déplacable dans un étrier (63) fixé sur le support (33), p. ex. au moyen d'un goujon (64).

7. Dispositif d'après une ou plusieurs des revendications 1 à 6,
caractérisé en ce que
au moins une des glissières supports (16) est munie d'une rampe d'introduction (31) inclinée en direction de transport (F) de la bande transporteuse (2).

8. Dispositif d'après une ou plusieurs des revendications 1 à 7,
caractérisé en ce que
les bandes de guidage (11, 12) s'étendent continuellement ou avec interruptions sur toute ou une partie de la longueur de la surface de portée de la bande transporteuse (2).

9. Dispositif d'après une ou plusieurs des revendications 1 à 8,
caractérisé en ce que
les bandes de guidage (11, 12) sont formées respectivement par une courroie dentée sans fin.

10. Dispositif d'après une ou plusieurs des revendications 1 à 9,
caractérisé en ce que
les bandes de guidage (11, 12) sont munies de cames d'entraînement (13, 14) passant par-dessus la bande transporteuse (2) et espacées latéralement.

11. Dispositif d'après la revendication 10,
caractérisé en ce que,
soudées p.ex. aux courroies dentées, les cames d'entraînement (13, 14) sont formées par des plaques fixées aux bandes de guidage (11, 12) et saillant perpendiculairement de l'axe de celles-ci.
